# EUROPEAN PATENT APPLICATION

(11) **EP 4 353 349 A1**
(43) Date of publication of application: **17.04.2024**
(21) Application number: 22902994.7
(22) Date of filing: 08.10.2022
(51) Int. Cl.: B01F 25/60

(54) **PULPING EQUIPMENT**

(30) Priority: 06.12.2021 CN 202111479554
(71) Applicant: Contemporary Amperex Technology Co., Limited, Ningde, Fujian 352100 (CN)
(72) Inventor: XU, Liyong, Ningde, Fujian 352100 (CN); MIAO, Haibo, Ningde, Fujian 352100 (CN)
(74) Representative: Behr, Wolfgang
(86) International application number: PCT/CN2022/123894
(87) International publication number: WO 2023/103569

(57) **Abstract**

An embodiment of the present application provides a slurry preparation equipment, including a slurry preparation device and a circulation tank. The slurry preparation device includes a device body, and a first feed port, a second feed port and a first discharge port are arranged on the device body. The first feed port is used to input a solid raw material, the circulation tank includes a tank body, an input pipe and an output pipe are arranged on the tank body, the second feed port is connected to the output pipe, and the first discharge port is connected to the input pipe. Using the slurry preparation equipment provided by the embodiment of the present application, by gradually increasing the amount of solid raw material to be mixed, use of the slurry preparation equipment provided by the embodiment of the present application can increase the solid content of the prepared slurry, as compared with adding all the solid raw material and the liquid or solid-liquid mixture for mixing therewith at one time for stirring. Also, through stirring for multiple times in cycles, the viscosity and uniformity of the prepared slurry can be improved, and the overall quality of the prepared slurry can be improved.

## Description

### CROSS-REFERENCE

The present application refers to Chinese patent application No. 202111479554.0 filed on December 6, 2021 and entitled "SLURRY PREPARATION EQUIPMENT," which is incorporated herein by reference in its entirety.

### TECHNICAL FIELD

The present application relates to the technical field of mechanical processing equipments, and in particular, to a slurry preparation equipment.

### BACKGROUND ART

This section provides background information related to the present application only and is not necessarily prior art.

In the slurry preparation equipment in the related art, powder and liquid are transported to the same chamber for stirring and mixing, and then the mixed suspension is output. This type of slurry preparation equipment is suitable for production of mixtures with low requirements of quality such as solid content, but cannot meet the production demands of high-quality slurry of low viscosity, high solid content and high stability.

### SUMMARY OF THE INVENTION

It is an object of the embodiments of the present application to provide a slurry preparation equipment to improve the quality of the prepared slurry. The following specific technical solutions are adopted.

An embodiment of the present application provides a slurry preparation equipment, including a slurry preparation device and a circulation tank. The slurry preparation device includes a device body, and a first feed port, a second feed port and a first discharge port are arranged on the device body. The first feed port is used to input a solid raw material, the circulation tank includes a tank body, an input pipe and an output pipe are arranged on the tank body, the second feed port is connected to the output pipe, and the first discharge port is connected to the input pipe.

According to the slurry preparation equipment provided by the embodiment of the present application, the solid raw material is fed from the first feed port of the device body, and can be stirred and mixed with the liquid or solid-liquid mixture fed from the second feed port to prepare a slurry. Then the prepared slurry is fed into the input pipe from the first discharge port, passes through the output pipe of the circulation tank, and into the device body from the second feed port, and is stirred and mixed with the solid raw material fed continuously from the first feed port to prepare a new slurry. By repeating the cycle, compared with adding all the solid raw material and the liquid or solid-liquid mixture for mixing therewith at one time for stirring, use of the slurry preparation equipment provided by the embodiment of the present application can increase the solid content of the prepared slurry, and the viscosity and uniformity of the prepared slurry can be improved by stirring for multiple times in cycles, thereby improving the overall quality of the prepared slurry.

In some embodiments of the present application, a feed chamber and an impeller dispersion chamber are defined inside the device body, the feed chamber is located above the impeller dispersion chamber and communicating with the impeller dispersion chamber; the slurry preparation device further includes a dispersing head and an impeller, the feed chamber communicates with the first feed port and the second feed port, the dispersing head is arranged in the feed chamber, the impeller dispersion chamber communicates with the first discharge port, and the impeller is arranged in the impeller dispersion chamber. By arranging the dispersing head and the impeller in the device body of the slurry preparation device, and arranging the dispersing head above the impeller, the solid raw material will first be quickly dispersed by the dispersing head after being fed into the feed chamber from the first feed port and then transported downward to the impeller dispersion chamber, which increases the mixing efficiency of the solid raw material and the liquid or solid-liquid mixture, and during the high-speed rotation of the impeller, the solid raw material and the liquid or solid-liquid mixture can be stirred more uniformly, improving the quality of the prepared slurry.

In some embodiments of the present application, the slurry preparation device further includes a driving motor and a hollow reducer, an output of the driving motor is connected to an input of the hollow reducer in a belt transmission mode, and the driving motor is configured to drive the impeller and the dispersing head to rotate via the hollow reducer. The output of the driving motor is connected to the input of the hollow reducer in a belt transmission mode, so as to transmit the driving force output by the driving motor to the hollow reducer more steadily, and then the driving torque is increased via the hollow reducer, so that the impeller and the dispersing head can rotate stably and reliably. Also, larger output torque is more beneficial for producing a slurry with high solid content and improving the viscosity and uniformity of the slurry.

In some embodiments of the present application, the hollow reducer is arranged below the impeller dispersion chamber, the slurry preparation device further includes a main shaft, a first end of the main shaft is connected to the dispersing head and the impeller, and a second end of the main shaft is connected to the output of the hollow reducer. The hollow reducer is arranged below the impeller dispersion chamber, which reduces the distance from the ground and makes it easier to carry out spot inspection and maintenance of the driving motor and the hollow reducer. The dispersing head and the impeller are connected coaxially via the main shaft so as to rotate simultaneously by means of the torque transmitted by the hollow reducer, which can reduce the length-to-diameter ratio of the main shaft, thereby reducing the radial runout of the most distal end of the main shaft.

In some embodiments of the present application, a mechanical seal structure is provided at the mating portions of the lower portion of the impeller dispersion chamber with the main shaft. The slurry prepared in the impeller dispersion chamber can be prevented from overflowing along the main shaft by providing a mechanical seal structure at the mating portions of the lower portion of the impeller dispersion chamber with the main shaft.

In some embodiments of the present application, the slurry preparation device further includes a bearing for fixing the main shaft, an inner ring of the bearing is connected with the main shaft, and an outer ring of the bearing is fixed between the impeller dispersion chamber and the hollow reducer. By providing the bearing, when the main shaft rotates, since the main shaft is connected with the inner ring of the bearing, the friction force on an outer wall of the main shaft can be reduced due to rolling of the balls (or rollers) of the inner ring and the outer ring of the bearing, which consequently improves the stability in rotation of the main shaft. Moreover, the outer ring of the bearing is fixed between the impeller dispersion chamber and the hollow reducer, that is, the bearing on the main shaft and the mechanical seal structure are both located below the impeller dispersion chamber, so that metal particles generated from wears of the bearing or wears of the mechanical seal structure cannot enter the slurry prepared by the slurry preparation device, thereby reducing the risk of excessive metal particles in the prepared slurry, and further improving the quality of the prepared slurry.

In some embodiments of the present application, the slurry preparation device further includes a cooling jacket sleeved on an outer wall of the outer ring of the bearing. By providing the cooling jacket, when the main shaft rotates at high speed, a great amount of heat is generated from the bearing, and the cooling jacket can cool down the bearing to ensure the normal operation of the bearing and prolong the service life of the bearing.

In some embodiments of the present application, the circulation tank further includes a cooler connected between the second feed port and the tank body via the output pipe. As work is applied to the slurry formed by stirring and mixing in the device body, the temperature of the slurry will rise. By providing a cooler between the second feed port and the tank body, the temperature of the circulated slurry can be reduced, so that the temperature of the slurry transported through the output pipe can be controlled within a specified temperature range before the slurry is fed into the device body from the second feed port.

In some embodiments of the present application, the slurry preparation device further includes a pneumatic butterfly valve adapted to the first feed port. By arranging the pneumatic butterfly valve at the first feed port, it can control a specified amount of the solid raw material to be fed into the device body, and when the amount of the solid raw material fed into the device body reaches the specified amount, it provides the cutoff function and closes the first feed port to prevent the solid raw material from increasing, thereby improving the convenience in use of the slurry preparation equipment.

In some embodiments of the present application, the slurry preparation equipment further includes a solid material chamber for storing a solid raw material, a second discharge port is provided at the bottom of the solid material chamber, and size of the cross section of the lower portion of the solid material chamber gradually decreases from the end far from the second discharge port to the end close to the second discharge port. The first feed port is arranged at the top of the device body, and the second discharge port is connected to the first feed port. The second discharge port is arranged at the bottom of the solid material chamber, and size of the cross section of the lower portion of the solid material chamber gradually decreases from the end far from the second discharge port to the end close to the second discharge port. That is, the interior of the solid material chamber has a tapered slope, which can provide guidance for downward drainage of the solid raw material stored in the solid material chamber, thereby increasing the discharging speed of the solid raw material. Moreover, the first feed port is arranged at the top of the device body, and the second discharge port is connected with the first feed port, so that the solid raw material can directly fall into the device body in the height direction of the slurry preparation equipment by its own gravity, which can effectively solve the problems of screw blocking and slow discharging speed compared with the approach of transporting the solid raw material with a side feeding screw in the related art.

In some embodiments of the present application, the circulation tank further includes a circulation pump connected to the bottom of the tank body through an output pipe to provide circulation power for the circulation tank. By providing the circulation pump connected to the bottom of the tank body, the liquid or solid-liquid mixture to be mixed with the solid raw material can be drawn out through the output pipe and be fed into the interior of the device body from the second feed port, and then be stirred and mixed with the solid raw material in the device body to form a slurry that is sucked into the tank body from the first discharge port through the input pipe. In this way, the prepared slurry is circulated by the circulation power provided by the circulation pump. After adding the solid raw material and stirring for multiple times, a slurry with higher solid content is prepared.

### DESCRIPTION OF DRAWINGS

In order to illustrate the technical solutions of the embodiments of the present application more clearly, the drawings required for describing the embodiments will be described briefly below. Obviously, the drawings described below show only some embodiments of the present application, and other drawings can be obtained by a person of ordinary skill in the art from these drawings.
Fig. 1 is a schematic structural view of a slurry preparation equipment according to an embodiment of the present application; and
Fig. 2 is a schematic structural view of a slurry preparation device according to an embodiment of the present application.

Reference numerals in Detailed Description are as follows:
slurry preparation device 10; device body 11; dispersing head 12; impeller 13; driving motor 14; hollow reducer 15; main shaft 16; mechanical seal structure 17; bearing 18; cooling jacket 19; pneumatic butterfly valve 500;
first feed port 101; second feed port 102; first discharge port 103;
feed chamber 111; impeller dispersion chamber 112;
circulation tank 20; tank body 21; circulation pump 22; cooler 23;
input pipe 201; output pipe 202;
solid material chamber 30; second discharge port 301.

### DETAILED DESCRIPTION

Examples of the technical solutions of the present application will be described in detail below in conjunction with the drawings. The following embodiments are merely intended to illustrate the technical solutions of the present application more clearly, and therefore are only intended as examples and shall not be intended to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an associative relationship for describing associated objects, indicating that there may be three relationships, for example A and/or B may represent three situations: A alone, both A and B, and B alone. In addition, the character "/" herein generally means that the associated objects before and after it are in an "or" relationship.

In the description of the embodiments of the present application, the term "a plurality of' refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "central", "longitudinal", "transverse", "length", "width", "height", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and defined, the technical terms "mount", "join", "connect", "fix", etc. should be understood in a broad sense, such as, a fixed connection, a detachable connection, or an integral connection; a mechanical connection, or an electrical connection; a direct connection, an indirect connection through an intermediate medium, an internal communication between two elements, or interaction between two elements. For those of ordinary skill in the art, the specific meanings of the above terms in the embodiments of the present application can be understood according to specific situations.

In the slurry preparation equipment in the related art, powder and liquid are transported to the same chamber for stirring and mixing, and then the mixed suspension is output. This type of slurry preparation equipment is suitable for production of mixtures with low requirements of quality such as solid content, but cannot meet the production demands of high-quality slurry of low viscosity, high solid content and high stability.

In order to improve the quality of the prepared slurry, the inventor proposed a slurry preparation equipment after in-depth research in which a circulation pipeline is provided. In one way of the circulation pipeline, the slurry formed from the stirred solid and liquid is transported to the circulation tank, and in the other way thereof, the slurry previously prepared is extracted from the circulation tank to be further stirred with the solid added continuously, and such a cycle continues until the viscosity, solid content and uniformity of the prepared slurry are close to or reach the desired values, thereby increasing the quality of the prepared slurry.

The slurry preparation equipment disclosed in the embodiments of the present application can be used, without limitation, for electrode slurry preparation and other slurry production processes requiring high solid content. The electrode assembly is a component in the battery cell where electrochemical reaction occurs. The battery cell may be a secondary cell or primary cell; or a lithium-sulfur cell, a sodium-ion cell, or a magnesium-ion cell, but are not limited thereto. The battery cell may be of a cylindrical, flat, rectangular shape or another shape. The electrode assembly is mainly formed of a positive electrode plate and a negative electrode plate that are wound or stacked. The positive electrode plate and the negative electrode plate are formed by coating the battery positive and negative electrode slurry on a metal strip, and the battery positive and negative electrode slurry coated on the metal strip is a slurry prepared by uniformly mixing solid raw materials such as positive or negative active materials with liquid or solid-liquid mixtures such as special conductive agents, binders, and solvents in a specified ratio. The enhancement of the efficiency and improvement of the quality of the electrode slurry preparation process is an important issue in electrode production and manufacturing. Using the slurry preparation equipment disclosed in the embodiment of the present application, the liquid or solid-liquid mixture is circulated so that it is stirred and mixed, in small amounts and for multiple times, with the solid raw material that is continuously added. Compared with adding all the solid raw materials and the liquid or solid-liquid mixture for mixing therewith at one time for stirring, the prepared slurry has higher solid content, the viscosity and uniformity of the prepared slurry can be improved by stirring for multiple times in cycles, so that a slurry that is more conformable with the requirements of electrode production and manufacturing can be prepared.

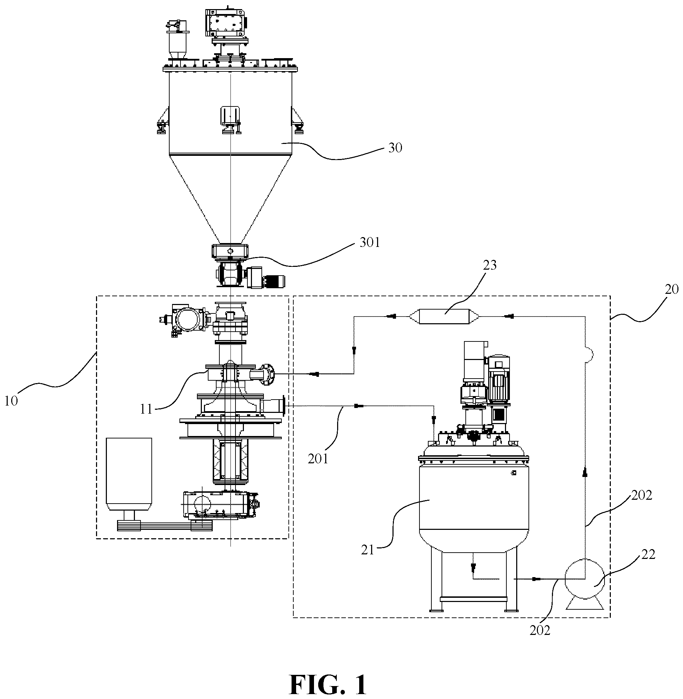

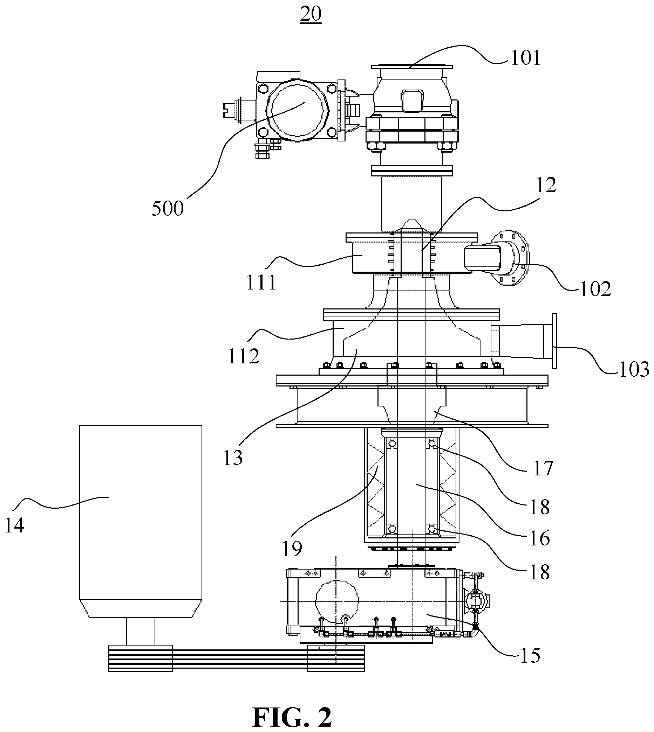

In view of this, as shown in Figs. 1 and 2, an embodiment of the present application provides a slurry preparation equipment, including a slurry preparation device 10 and a circulation tank 20. The slurry preparation device 10 includes a device body 11, and a first feed port 101, a second feed port 102 and a first discharge port 103 are arranged on the device body 11. The first feed port 101 is used to input a solid raw material, the circulation tank 20 includes a tank body 21, an input pipe 201 and an output pipe 202 are arranged on the tank body 21, the second feed port 102 is connected to the output pipe 202, and the first discharge port 103 is connected to the input pipe 201.

Solid raw materials can be understood as solid materials for further processing. The solid materials may be in the form of large particles of solids, small particles of solids, or powdery solids, and may be products of other processes, or products that grow or form naturally from the natural world. For example, during the electrode slurry preparation process, the solid raw materials for the prepared battery positive and negative electrode slurry for coating on the metal strip mainly include powdery solids, such as active materials of the positive electrode or negative electrode, and further, the powdery solids are stirred and mixed with liquids such as special conductive agents, binders and solvents in the specified ratio, so that the battery positive and negative electrode slurry can be formed.

The slurry preparation device 10 can be understood as a device for stirring the solid raw material and the liquid or slurry in the slurry preparation equipment.

The device body 11 can be understood as a shell with a cavity in the slurry preparation device 10 for accommodating or connecting or installing other components in the slurry preparation device 10 and providing a space for mixing the solid raw materials with the liquid or slurry.

The first feed port 101, the second feed port 102 and the first discharge port 103 may be various through holes arranged on the device body 11, or pipe interface structures connected with various through holes provided on the device body 11 for transporting liquids, gases or loose solids. In the height direction of the device body 11, the heights of the positions of the first feed port 101 and the second feed port 102 may be the same or different, and the height of the position of the first discharge port 103 is lower than that of the first feed port 101 and lower than that of the second feed port 102.

The circulation tank 20 can be understood as a device configured with a circulation system and having a transitional space required for balancing the processes of sucking in and drawing out the liquid or slurry.

The tank body 21 can be understood as a mold cavity forming a transitional space required for balancing the processes of sucking in and drawing out the liquid or slurry.

The input pipe 201 is a pipeline structure configured to suck the liquid or slurry into the tank body 21.

The output pipe 202 is a pipeline structure configured to draw the liquid or slurry out of the tank body 21.

According to the slurry preparation equipment provided by the embodiment of the present application, the solid raw material is fed from the first feed port 101 of the device body 11, and can be stirred and mixed with the liquid or solid-liquid mixture fed from the second feed port 102 to prepare a slurry. Then the prepared slurry is fed into the input pipe 201 from the first discharge port 103, passes through the output pipe 202 of the circulation tank 20, and into the device body 11 from the second feed port 102, and is stirred and mixed with the solid raw material fed continuously from the first feed port 101 to prepare a new slurry. By repeating the cycle, compared with adding all the solid raw material and the liquid or solid-liquid mixture for mixing therewith at one time for stirring, use of the slurry preparation equipment provided by the embodiment of the present application can increase the solid content of the prepared slurry, and the viscosity and uniformity of the prepared slurry can be improved by stirring for multiple times in cycles, thereby improving the overall quality of the prepared slurry.

In some embodiments of the present application, as shown in Fig. 2, a feed chamber 111 and an impeller dispersion chamber 112 are defined inside the device body 11, the feed chamber 111 is located above the impeller dispersion chamber 112 and communicating with the impeller dispersion chamber 112; the slurry preparation device 10 further includes a dispersing head 12 and an impeller 13, the feed chamber 111 communicates with the first feed port 101 and the second feed port 102, the dispersing head 12 is arranged in the feed chamber 111, the impeller dispersion chamber 112 communicates with the first discharge port 103, and the impeller 13 is arranged in the impeller dispersion chamber 112.

The feed chamber 111 can be understood as a transitional space before the solid raw material and the liquid or solid-liquid mixture for mixing therewith are fed into the device body 11 for stirring.

The impeller dispersion chamber 112 can be understood as a processing space for stirring after the solid raw material and the liquid or solid-liquid mixture for mixing therewith are fed into the device body 11.

The dispersing head 12 is a rotating mechanism for quickly dispersing the solid raw material fed into the feed chamber 111 from the first feed port 101 and adding a force for its downward transportation to increase the falling speed of the solid raw material.

The impeller 13 is a disk equipped with moving blades. Once the impeller 13 is driven to rotate, the moving blades drive the solid raw material and the liquid or solid-liquid mixture for mixing therewith to be rotated, stirred and sheared, while generating a centrifugal force to throw the prepared slurry into the first discharge port 103.

By arranging the dispersing head 12 and the impeller 13 in the device body 11 of the slurry preparation device 10, and arranging the dispersing head 12 above the impeller, the solid raw material will first be quickly dispersed by the dispersing head 12 after being fed into the feed chamber 111 from the first feed port 101 and then transported downward to the impeller dispersion chamber 112, which enhances the mixing efficiency of the solid raw material and the liquid or solid-liquid mixture, and during the high-speed rotation of the impeller 13, the solid raw material and the liquid or solid-liquid mixture can be stirred more uniformly, improving the quality of the prepared slurry.

In some embodiments of the present application, as shown in Fig. 2, the slurry preparation device 10 further includes a driving motor 14 and a hollow reducer 15. The output of the driving motor 14 is connected to the input of the hollow reducer 15 in a belt transmission mode. The driving motor 14 is configured to drive the impeller 13 and the dispersing head 12 to rotate via the hollow reducer 15.

The driving motor 14 is a device capable of converting electrical energy into mechanical energy, and its main function is to generate driving torque as the power source for other moving components or machinery.

The hollow reducer 15 is suitable for various rotary motion scenarios and is a device driven by a motor to realize automatic angle adjustment. It has a turntable usually of a hollow structure, and uses the single-pole helical gear reduction method to increase the output torque. It has characteristics of high repetitive positioning accuracy, high rigidity and high rotation accuracy.

Belt transmission is a type of mechanical transmission that uses a flexible belt tensioned on the pulley for motion or power transmission. It is usually composed of a driving wheel, a driven wheel and an endless belt tensioned on the two wheels. It has characteristics of stable transmission, capability of buffering and vibration absorption and capability of transmitting power over a large shaft distance and between multiple shafts.

The output of the driving motor 14 is connected to the input of the hollow reducer 15 in a belt transmission mode, so as to transmit the driving force output by the driving motor 14 to the hollow reducer 15 more steadily, and then the driving torque is increased via the hollow reducer 15, so that the impeller 13 and the dispersing head 12 can rotate stably and reliably. Also, larger output torque is more beneficial for producing a slurry with high solid content and improving the viscosity and uniformity of the slurry.

In some embodiments of the present application, as shown in Fig. 2, the hollow reducer 15 is arranged below the impeller dispersion chamber 112. The slurry preparation device 10 further includes a main shaft 16, a first end of the main shaft 16 is connected to the dispersing head 12 and the impeller 13, and a second end of the main shaft 16 is connected to the output of the hollow reducer 15.

The main shaft 16 can be understood as an intermediate element used to connect at least two parts, and it has a circular cross section and usually serves as the center of rotation.

The hollow reducer 15 is arranged below the impeller dispersion chamber 112, which reduces the distance from the ground and makes it easier to carry out spot inspection and maintenance of the driving motor 14 and the hollow reducer 15. The dispersing head 12 and the impeller 13 are connected coaxially via the main shaft 16 so as to rotate simultaneously by means of the torque transmitted by the hollow reducer 15, which can reduce the length-to-diameter ratio of the main shaft 16, thereby reducing the radial runout of the most distal end of the main shaft 16.

In some embodiments of the present application, as shown in Fig. 2, a mechanical seal structure 17 is provided at the mating portions of the lower portion of the impeller dispersion chamber 112 with the main shaft 16.

The mechanical seal structure 17 refers to a device for preventing fluid leakage composed of at least one pair of end faces perpendicular to the axis of rotation that, under the action of fluid pressure and the elastic force (or magnetic force) of the compensation mechanism and in combination with an auxiliary seal, keep fitted to each other and slide relative to each other. It can be understood as a shaft seal device for rotating machinery. For example, in equipment such as centrifugal pumps, centrifuges, reactors, and compressors, since the transmission shaft runs through the inside and outside of the equipment, there is a circumferential gap between the shaft and the equipment, and the medium in the equipment leaks outward through this gap. If the pressure inside the equipment is lower than the atmospheric pressure, air will leak into the equipment, so there must be a shaft seal device to prevent leakage. The commonly used mechanical seal structure is composed of a stationary ring (static ring), a rotating ring (movable ring), a spring seat of elastic element, a set screw, a rotating ring-assisted auxiliary seal ring and a stationary ring-assisted auxiliary seal ring etc. An anti-rotation pin is fixed to the pressure cover to prevent the stationary ring from rotating.

The slurry prepared in the impeller dispersion chamber 112 can be prevented from overflowing along the main shaft 16 by providing the mechanical seal structure 17 at the mating portions of the lower portion of the impeller dispersion chamber 112 with the main shaft 16.

In some embodiments of the present application, as shown in Fig. 2, the slurry preparation device 10 further includes a bearing 18 for fixing the main shaft 16, the inner ring of the bearing 18 is connected to the main shaft 16, and the outer ring of the bearing 18 is fixed between the impeller dispersion chamber 112 and the hollow reducer 15.

The bearing 18 is a mechanical element including an inner ring, an outer ring, multiple balls (or rollers) and a ball frame. The ball frame is used to connect multiple balls (or rollers), each ball (or roller) is embedded between the inner ring and the outer ring, and both the outer ring and the inner ring can rotate through rolling of the balls (or rollers).

By providing the bearing 18, when the main shaft 16 rotates, as the main shaft 16 is connected with the inner ring of the bearing 18, the friction force on the outer wall of the main shaft 16 can be reduced due to rolling of the balls (or rollers) of the inner ring and the outer ring of the bearing 18, which consequently improves the stability in rotation of the main shaft 16. Moreover, the outer ring of the bearing 18 is fixed between the impeller dispersion chamber 112 and the hollow reducer 15, that is, the bearing 18 on the main shaft 16 and the mechanical seal structure 17 are both located below the impeller dispersion chamber 112, so that metal particles generated from wears of the bearing 18 or wears of the mechanical seal structure 17 cannot enter the slurry prepared by the slurry preparation device 10, thereby reducing the risk of excessive metal particles in the prepared slurry, and further improving the quality of the prepared slurry.

In some embodiments of the present application, as shown in Fig. 2, the slurry preparation device 10 further includes a cooling jacket 19 sleeved on the outer wall of the outer ring of the bearing 18.

The cooling jacket 19 can be understood as an outer casing with a structure adapted to the outer ring of the bearing 18, and a cooling medium such as cooling water or other cooling fluids is passed through the outer casing to cool the outer wall of the outer ring of the bearing 18.

By providing the cooling jacket 19, when the main shaft 16 rotates at high speed, a great amount of heat is generated from the bearing 18, and the cooling jacket 19 can cool down the bearing 18 to ensure the normal operation of the bearing 18 and prolong the service life of the bearing 18.

In some embodiments of the present application, as shown in Fig. 1, the circulation tank 20 further includes a cooler 23 connected between the second feed port 102 and the tank body 21 via an output pipe 202.

The cooler 23 is a heat exchange device for cooling the fluid, usually using water or air as the coolant to remove heat, and the main types of the cooler include shell and tube coolers, plate coolers and air-cooled coolers.

As work is applied to the slurry formed by stirring and mixing in the device body 11, its temperature will rise. By providing a cooler 23 between the second feed port 102 and the tank body 21, the temperature of the circulated slurry can be reduced, so that the temperature of the slurry transported through the output pipe 202 can be controlled within a specified temperature range before the slurry is fed into the device body 11 from the second feed port 102.

In some embodiments of the present application, as shown in Fig. 2, the slurry preparation device 10 further includes a pneumatic butterfly valve 500 adapted to the first feed port 101.

The pneumatic butterfly valve 500 is composed of a pneumatic actuator and a butterfly valve. It uses a circular butterfly plate that rotates with the valve stem to open and close, so as to implement a pneumatic valve that activates the action. It is mainly used as a cutoff valve, and it can also be designed to have a regulation function or both a sectional valve function and a regulation function, that is, it can be used to regulate the flow rate and intercept the medium. It is suitable for low-pressure large and medium-caliber pipelines. It can be classified into stainless steel pneumatic butterfly valves, hard-sealed pneumatic butterfly valves, soft-sealed pneumatic butterfly valves and carbon steel pneumatic butterfly valves.

By arranging the pneumatic butterfly valve 500 at the first feed port 101, it can control a specified amount of the solid raw material to be fed into the device body 11, and when the amount of the solid raw material fed into the device body 11 reaches the specified amount, it provides the cutoff function and closes the first feed port 101 to prevent the solid raw material from increasing, thereby improving the convenience in use of the slurry preparation equipment.

In some embodiments of the present application, as shown in Fig. 1, the slurry preparation equipment further includes a solid material chamber 30 for storing solid raw materials, a second discharge port 301 is provided at the bottom of the solid material chamber 30, and size of the cross section of the lower portion of the solid material chamber 30 gradually decreases from the end far from the second discharge port 301 to the end close to the second discharge port 301. The first feed port 101 is arranged at the top of the device body 11, and the second discharge port 301 is connected to the first feed port 101.

The solid material chamber 30 can be understood as a container that is hollow inside and can be used to accommodate and store materials.

The second discharge port 301 may be a through hole arranged at the bottom of the solid material chamber 30, or a pipe interface structure connected to the through hole arranged at the bottom of the solid material chamber 30, for transporting liquid, gas or loose solid.

The second discharge port 301 is arranged at the bottom of the solid material chamber 30, and size of the cross section of the lower portion of the solid material chamber 30 gradually decreases from the end far from the second discharge port 301 to the end close to the second discharge port 301. That is, the lower portion of the interior of the solid material chamber 30 has a tapered slope, which can provide guidance for downward drainage of the solid raw material stored in the solid material chamber 30, thereby increasing the discharging speed of the solid raw material. Moreover, the first feed port 101 is arranged at the top of the device body 11, and the second discharge port 301 is connected with the first feed port 101, so that the solid raw material can directly fall into the device body 11 in the height direction of the slurry preparation equipment by its own gravity, which can effectively solve the problems of screw blocking and slow discharging speed compared with the approach of transporting the solid raw material with a side feeding screw in the related art.

In some embodiments of the present application, as shown in Fig. 1, the circulation tank 20 further includes a circulation pump 22, which is connected to the bottom of the tank body 21 through the output pipe 202 to provide circulation power for the circulation tank 20.

The circulation pump 22 is a device used in the circulation system to transport reaction and to absorb and separate the liquid or solid-liquid mixture, and overcome the pressure drop of the circulation system. It can be understood as a device that can concentrate dispersed materials and increase their potential energy.

By providing the circulation pump 22 connected to the bottom of the tank body 21, the liquid or solid-liquid mixture to be mixed with the solid raw material can be drawn out through the output pipe 202 and be fed into the interior of the device body 11 from the second feed port 102, and then be stirred and mixed with the solid raw material in the device body 11 to form a slurry that is sucked into the tank body 21 from the first discharge port 103 through the input pipe 201. In this way, the prepared slurry is circulated by the circulation power provided by the circulation pump 22. After adding the solid raw material and stirring for multiple times, a slurry with higher solid content is prepared.

In some embodiments of the present application, as shown in Figs. 1 and 2, the slurry preparation equipment includes a slurry preparation device 10, a circulation tank 20 and a solid material chamber 30. The slurry preparation device 10 includes a device body 11, a dispersing head 12, an impeller 13, a driving motor 14, a hollow reducer 15, a main shaft 16, a mechanical seal structure 17, a bearing 18, a cooling jacket 19 and a pneumatic butterfly valve 500. A feed chamber 111 and an impeller dispersion chamber 112 are defined inside the device body 11. The feed chamber 111 is located above the impeller dispersion chamber 112 and communicates with the impeller dispersion chamber 112. The feed chamber 111 communicates with the first feed port 101 and the second feed port 102. The dispersing head 12 is arranged in the feed chamber 111. The impeller dispersion chamber 112 communicates with the first discharge port 103. The impeller 13 is arranged in the impeller dispersion chamber 112. The first feed port 101 is used to input a solid raw material. The output of the driving motor 14 is connected to the input of the hollow reducer 15 in a belt transmission mode. The driving motor 14 is configured to drive the impeller 13 and the dispersing head 12 to rotate through the hollow reducer 15. The mechanical seal structure 17 is arranged at the mating portions of the lower portion of the impeller dispersion chamber 112 with the main shaft 16. The bearing 18 is used to fix the main shaft 16. The inner ring of the bearing 18 is connected with the main shaft 16, and the outer ring of the bearing 18 is fixed between the impeller dispersion chamber 112 and the hollow reducer 15. The cooling jacket 19 is sleeved on the outer wall of the outer ring of the bearing 18. The butterfly valve 500 is adapted to the first feed port 101. The circulation tank 20 includes a tank body 21, and an input pipe 201 and an output pipe 202 are arranged on the tank body 21. The second feed port 102 is connected with the output pipe 202, and the first discharge port 103 is connected with the input pipe 201.

According to the slurry preparation equipment provided by an embodiment of the present application, the second discharge port 301 is arranged at the bottom of the solid material chamber 30, and size of the cross section of the lower portion of the solid material chamber 30 gradually decreases from the end far from the second discharge port 301 to the end close to the second discharge port 301. That is, the lower portion of the interior of the solid material chamber 30 has a tapered slope, which can provide guidance for downward drainage of the solid raw material stored in the solid material chamber 30, thereby increasing the discharging speed of the solid raw material. Moreover, the first feed port 101 is arranged at the top of the device body 11, and the second discharge port 301 is connected with the first feed port 101, so that the solid raw material can directly fall into the device body 11 in the height direction of the slurry preparation equipment by its own gravity, which can effectively solve the problems of screw blocking and slow discharging speed compared with the approach of transporting the solid raw material with a side feeding screw in the related art. The solid raw material is fed from the first feed port 101 of the device body 11. After the solid raw material is fed into the feed chamber 111 from the first feed port 101, it is quickly dispersed by the dispersing head 12 and transported downward to the impeller dispersion chamber 112, which enhances the mixing efficiency of the solid raw material and the liquid or solid-liquid mixture. During the high-speed rotation of the impeller 13, the solid raw material and the liquid or solid-liquid mixture can be stirred more uniformly, and the quality of the prepared slurry is improved. Then the prepared slurry is fed into the input pipe 201 from the first discharge port 103, and with the circulation power provided by the circulation pump 22, the slurry is fed into the device body 11 from the second feed port 102 through the output pipe 202, and is stirred and mixed with the solid raw material fed continuously from the first feed port 101 to form a new slurry. By repeating the cycle, compared with adding all the solid raw material and the liquid or solid-liquid mixture for mixing therewith at one time for stirring, use of the slurry preparation equipment provided by the embodiment of the present application can increase the solid content of the prepared slurry, and the viscosity and uniformity of the prepared slurry can be improved by stirring for multiple times in cycles, thereby improving the overall quality of the prepared slurry. In addition, the output of the driving motor 14 is connected to the input of the hollow reducer 15 in a belt transmission mode, so that the driving force output by the driving motor 14 can be transmitted to the hollow reducer 15 more steadily, and then the driving torque is increased via the hollow reducer 15, so that the impeller 13 and the dispersing head 12 can rotate stably and reliably. Also, larger output torque is more beneficial for producing a slurry with high solid content and improving the viscosity and uniformity of the slurry. The bearing 18 on the main shaft 16 and the mechanical seal structure 17 are both located below the impeller dispersion chamber 112, so that the metal particles produced by wears of the bearing 18 or wears of the mechanical seal structure 17 cannot enter the slurry prepared by the slurry preparation device 10, thereby reducing the risk of excessive metal particles in the prepared slurry, and further improving the quality of the prepared slurry.

The above embodiments are merely used for illustrating rather than limiting the technical solutions of the present application. Although the present application has been described in detail with reference to the various embodiments above, those of ordinary skill in the art should understand that the technical solutions specified in the various embodiments above can still be modified, or some or all of the technical features therein can be equivalently substituted; and such modifications or substitutions do not cause the essence of the corresponding technical solutions to depart from the scope of the respective technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

It is to be noted that relational terms herein such as "first", "second", etc., are used only to distinguish one entity or operation from another and do not necessarily require or imply any actual relationship or order between these entities or operations. Furthermore, the term "include", "contain" or any other variant thereof is intended to cover non-exclusive inclusion such that a process, method, article or device comprising a series of elements includes not only those elements but also other elements not expressly listed or elements inherent to such process, method, article or device. Without more restrictions, an element defined by the phrase "including a(n)" does not exclude the existence of other identical elements in the process, method, article or equipment that includes the element.

The various embodiments of the present application are described in an associative manner, and the same and similar parts of the various embodiments can be referred to each other. Each embodiment focuses on the differences from other embodiments.

Described above are only preferred embodiments of the present application, and the description above is not intended to limit the scope of protection of the present application. Any modifications, equivalent substitutions, and improvements, etc. made within the spirit and principle of the present application shall fall within the scope of protection of the present application.

## Claims

1. A slurry preparation equipment, comprising a slurry preparation device and a circulation tank, wherein
the slurry preparation device comprises a device body, a first feed port, a second feed port and a first discharge port are arranged on the device body, the first feed port is used to input a solid raw material, the circulation tank comprises a tank body, an input pipe and an output pipe are arranged on the tank body, the second feed port is connected to the output pipe, and the first discharge port is connected to the input pipe.

2. The slurry preparation equipment according to claim 1, wherein a feed chamber and an impeller dispersion chamber are defined inside the device body, the feed chamber is located above the impeller dispersion chamber and communicating with the impeller dispersion chamber; the slurry preparation device further comprises a dispersing head and an impeller, the feed chamber communicates with the first feed port and the second feed port, the dispersing head is arranged in the feed chamber, the impeller dispersion chamber communicates with the first discharge port, and the impeller is arranged in the impeller dispersion chamber.

3. The slurry preparation equipment according to claim 2, wherein the slurry preparation device further comprises a driving motor and a hollow reducer, an output of the driving motor is connected to an input of the hollow reducer in a belt transmission mode, and the driving motor is configured to drive the impeller and the dispersing head to rotate via the hollow reducer.

4. The slurry preparation equipment according to claim 3, wherein the hollow reducer is arranged below the impeller dispersion chamber, the slurry preparation device further comprises a main shaft, a first end of the main shaft is connected to the dispersing head and the impeller, and a second end of the main shaft is connected to an output of the hollow reducer.

5. The slurry preparation equipment according to claim 4, wherein a mechanical seal structure is provided at the mating portions of a lower portion of the impeller dispersion chamber with the main shaft.

6. The slurry preparation equipment according to claim 4 or 5, wherein the slurry preparation device further comprises a bearing for fixing the main shaft, an inner ring of the bearing is connected to the main shaft, and an outer ring of the bearing is fixed between the impeller dispersion chamber and the hollow reducer.

7. The slurry preparation equipment according to claim 6, wherein the slurry preparation device further comprises a cooling jacket sleeved on an outer wall of the outer ring of the bearing.

8. The slurry preparation equipment according to any one of claims 1 to 7, wherein the circulation tank further comprises a cooler connected between the second feed port and the tank body via the output pipe.

9. The slurry preparation equipment according to any one of claims 1 to 8, wherein the slurry preparation device further comprises a pneumatic butterfly valve adapted to the first feed port.

10. The slurry preparation equipment according to any one of claims 1 to 9, further comprising a solid material chamber for storing the solid raw material, a second discharge port is arranged at the bottom of the solid material chamber, size of the cross section of a lower portion of the solid material chamber gradually decreases from the end far from the second discharge port to the end close to the second discharge port, the first feed port is arranged at the top of the device body, and the second discharge port is connected to the first feed port.

11. The slurry preparation equipment according to any one of claims 1 to 10, wherein the circulation tank further comprises a circulation pump connected to the bottom of the tank body through the output pipe to provide circulation power for the circulation tank.
